# EUROPEAN PATENT APPLICATION

(11) **EP 1 251 030 A1**
(43) Date of publication of application: **23.10.2002**
(21) Application number: 02076468.4
(22) Date of filing: 16.04.2002
(51) Int. Cl.: B60P 1/64, B60P 1/14

(54) **A loading system for an elongate transport container, as well as a vehicle, a bunker and a method to be used therewith**

(30) Priority: 18.04.2001 NL 1017874
(71) Applicant: Stichting Europe Metals, 4818 PD Breda (NL)
(72) Inventor: Nansink, Robert, 5663 JP Geldrop (NL)
(74) Representative: Dorna, Peter

(57) **Abstract**

The invention relates to a loading system for a rectangular, elongate transport container (3) having a closable front side (4), a rear side disposed opposite said front side, two lateral sides disposed opposite each other, a bottom side and a roof side, which system comprises a vehicle for the transport container (3), which is supported on a first supporting surface (10), a tilting device (20) for moving the transport container (3) between a horizontal position, in which the transport container (3) is present on the vehicle, and a vertical position, in which the transport container (3) is supported on its rear side at a position remote from the vehicle, and loading means for loading the transport container (3) in the vertical position thereof, wherein a second supporting surface (6) is provided, on which a weighing platform (7) is present, which weighing platform (7) comprises a bearing surface (8) on which the transport container (3) is supported in the vertical position thereof. The invention furthermore relates to a vehicle, a bunker (5) and a method to be used in combination with such a loading system.

## Description

The invention relates to a loading system for a rectangular, elongate transport container having a closable front side, a rear side disposed opposite said front side, two lateral sides disposed opposite each other, a bottom side and a roof side, which system comprises a vehicle for the transport container, which is supported on a first supporting surface, a tilting device for moving the transport container between a horizontal position, in which the transport container is present on the vehicle, and a vertical position, in which the transport container is supported on its rear side at a position remote from the vehicle, and loading means for loading the transport container in the vertical position thereof.

Such a loading system is known from international patent application WO 00/44585 A1. Said patent document describes the way in which a 40-foot container can be pivoted between a horizontal transport position and a steeply inclined loading and/or unloading position from a trailer by means of a linkage mechanism. In the aforesaid steeply inclined position, the container is supported on the bottom of a bunker.

A loading system as referred to in the introduction is also known in general for use with transport containers having a length of about 6 m (hereinafter called 20-foot containers). The 20-foot transport container is tilted from a horizontal position on a truck to a diagonal position about a horizontal axle located at the rear side of the truck by means of a hydraulic lifting device of the truck. Following that, a winch connected to said lifting device is activated, which winch lowers the 20-foot container onto the ground with one edge, after which the tilting movement is completed by the lifting device until the 20-foot container occupies a vertical position on the ground. From this vertical position, the 20-foot container is loaded with bulk-like material, such as scrap material, via the upper side, which is open at that moment. Such a manner of loading makes it possible to fill the 20-foot transport container completely, which means that the complete interior volume of the container is filled with the cargo and that the degree of filling is 100%.

Legislation prescribes that transport containers are bound by a maximum allowable loading weight. At the time of the realisation of the present invention, said maximum was 26,500 kg. This weight is exclusive of the container's own weight. In spite of the maximum degree of filling that is achieved with the vertical loading system for 20-foot containers as described above, it has become apparent that the aforesaid maximum allowable weight is not reached with certain types of cargo having a relatively low specific weight, that is, a relatively low weight per unit volume, but that, for example, only 12,000 to 14,000 kg of cargo can be loaded in the 20-foot container whilst the degree of filling is 100%. This renders the use of such containers for the export of particular types of material uneconomic, in spite of the fact that said materials, in view of the demand for said materials, are very suitable for export by themselves. In spite of this, such materials will not be exported in practice, or only to a limited extent, because of the relatively high transport costs.

The aforesaid maximum allowable weight not only applies to 20-foot containers, but also to containers having a length of about 12 m (hereinafter called 40-foot containers). It should be realised in this connection that the cost of carriage of a 40-foot container was only 30% higher than that of a 20-foot container at the time of the realisation of the present invention, that is, significantly less than directly proportional to the volume of the transport container. The unloading charges for a 40-foot container are even the same as the unloading charges for a 20-foot container. In other words, in principle a significant reduction of the transport charges per kilo or per unit volume is possible when using a 40-foot container. In that case it is necessary, however, to utilise the filling capacity of a 40-foot container maximally and optimally. The loading system for 20-foot containers as described above is not suitable for loading a 40-foot container, however. This is connected in particular with dangerous instabilities that may occur, which instabilities are caused not in the last place by the fact that the possibility of the containers being placed in a vertical position was not taken into account when the 40-foot containers were being designed.

The object of the invention is to provide a loading system of the above kind, by means of which the transport container in question can be loaded as closely to its maximum allowable loading weight as possible so as to keep the transport costs per kilogram of cargo as low as possible. In order to accomplish that objective, the loading system according to the invention is in the first place characterized by a second supporting surface, on which a weighing platform is present, which weighing platform comprises a bearing surface on which the transport container is supported in the vertical position thereof. The use of such a weighing platform enables the operating personnel to check constantly whether the maximum allowable loading weight has been reached during loading of the transport container in the vertical position thereof, in particular when bulk materials, such as scrap material, are being loaded.

Preferably, communication means are provided for the transmission of output data from the weighing platform to the loading means. Such communication means are advantageous, since the weighing platform and the loading means, which may comprise an endless feed belt, for example, which terminates above the open container in the vertical position thereof, or which may consist of a grab operated by a crane driver, are physically separated by some distance. The communication means make it possible to make the loading process dependent on the weight that has already been loaded. Thus it is at least possible to prevent overloading of the container, i.e. the allowable weight being exceeded. In addition to that it is possible, if the container can be loaded with materials having different specific weights, to make a selection between said materials, such that the entire volume of the transport container can be taken up by the cargo, with the allowable weight being approximated as closely as possible but not being exceeded. One can imagine, for example, that if half the volume of the transport container is loaded with a first type of material, for example consisting of so-called beaten aluminium, with 40% of the allowable weight being reached, the remaining 50% of the volume of the transport container will e loaded with a second, heavier material, such as cast aluminium, as a result of which the transport container will eventually be completely filled both with beaten-type aluminium and with cast-type aluminium, wherein the maximum allowable weight is exactly reached.

In particular if the loading of the transport container is carried out by persons, it is preferable to use wireless communication means, so that the person in question will have the relevant data as regards the loading weight available at any desired position, for example in the cabin of a grab crane.

Preferably, sensor means are provided for determining the degree of filling of the transport container during loading thereof, in particular, but not exclusively so, if said loading takes place fully automatically. The term degree of filling is understood to mean the percentage of the volume of the transport container that is filled with cargo. Said sensor means might consist of, for example, a camera system that is capable of image analysis, which looks into the transport container from the open upper side of the transport container in the vertical position thereof. Although it has become apparent in practice that experienced operators are capable of determining the degree of filling of the transport container to a reasonably accurate degree on the basis of acoustic and visual observations, the use of sensor means offers the additional advantage of enabling precise, optimum loading in situations where the loading of the transport container does not take place fully automatically, even if the operators are relatively inexperienced.

According to a very advantageous preferred embodiment, the second supporting surface is disposed at a lower level than the first supporting surface. The advantages of this arrangement are in particular apparent when loading a 40-foot container, which, owing the presence of the lower-level second supporting surface, can be moved to a vertical position more easily and, at any rate, more safely. In addition to that it is possible to load 40-foot containers with a larger group of materials and with a higher degree of filling in a vertical position thereof than is possible in the situation in which such containers are loaded in a horizontal position, as a result of which the export of such materials will sooner be economically sound and export over larger distances will be more profitable. Owing to the use of the lower-level second supporting surface, the centre of gravity of the container in the vertical position thereof, as well as in the diagonal position thereof when the transport container is being moved between the horizontal position and the vertical position, is located at a lower level than in the situation in which the container would be supported on the first supporting surface in the vertical position, as a result of which a more stable system is obtained.

A very advantageous embodiment is obtained if said second supporting surface is formed by a bottom of a first recessed bunker having an open upper side.

According to a very advantageous preferred embodiment, the vehicle is provided with widening elements near its rear end, which widening elements extend beyond the lateral sides of the transport container on either side thereof and which are designed to be supported by guides arranged on either side of the open upper side of the second supporting surface. As a result of the use of such widening elements and such guides, the vehicle, for example an articulated vehicle or a truck, is supported at its rear side, so that the risk of tilting of the vehicle under the influence of the weight of a loaded transport container can be excluded.

Such widening elements are preferably formed by projecting axle members which are rotatable with respect to the vehicle. This arrangement makes it possible to reverse the vehicle whilst the vehicle is supported on the guides at its rear side, rolling thereon with its widening elements.

Preferably, the widening elements are detachably connected to the vehicle, so that said widening elements can easily be removed and will not lead to undesirable situations in traffic. In addition to that it is possible to use the widening elements with successive vehicles at the same bunker.

Preferably, the vertical spacing between the bearing surface of the weighing platform and the guides ranges between 1.5 m and 2.5 m. Within the framework of the invention, the term "bottom" is to be understood to mean that part on which the transport container is supported in the vertical position thereof. If the vertical spacing is smaller, it will be significantly more difficult to move a 40-foot container to the vertical position in a controlled manner, or to move said container from the vertical position to the horizontal position. If said vertical spacing is too great, it will be possible to move a 40-foot container to the vertical position thereof indeed, but costly, complex measures will be required in that case in order to make it possible to move the container from said vertical position to the horizontal position in loaded condition, because there is a considerable risk of damage being caused to the transport container and its surroundings.

Preferably, the bearing surface of the weighing platform is fitted with receiving elements, for example in the form of dishes, for receiving coupling elements, for example in the form of roller elements, which are arranged near the rear side of the bottom of the transport container, which receiving elements and which coupling elements can pivotally interact. Such a combination of receiving elements and coupling elements enables the transport container to come into contact with the bearing surface of the weighing platform in the diagonal position without any risk of the container slipping away from the weighing platform in horizontal direction via the bearing surface. Said pivotal interaction makes it possible to pivot the transport container between the diagonal position and the vertical position.

The coupling elements preferably form part of a subframe which is detachably connected to the underside of the transport container. The use of such a subframe obviates the need to make adjustments on the transport containers. Furthermore, such a subframe may function to increase the stiffness of the transport container, whilst other arrangements may be made on the subframe so as to make it possible to move the transport container to the vertical position.

According to a preferred embodiment, a platform is provided near the front side of the transport container in the vertical position thereof. From such a platform, the front side can be closed after the transport container has been loaded, after which the transport container can be moved from the vertical position to a horizontal position on a vehicle.

According to a very advantageous preferred embodiment, the loading system is a dual system, i.e. a further second supporting surface comprising a further weighing platform is provided, for example as the bottom of a second bunker. In principle, the second supporting surface and the further second supporting surface, which each comprise a weighing platform, may be identical to each other. Such a dual system enables a vehicle to deliver a first transport container and position it vertically on the weighing platform of the second supporting surface. Following that, the vehicle can pick up a second, loaded transport container from the weighing platform associated with said further second surface, whilst the first transport container is being loaded. Then the vehicle removes the second transport container, after which a second vehicle can deliver a third transport container and position it vertically on the weighing platform of said further second supporting surface, after which the second vehicle can pick up the loaded first transport container. In this way, transport containers can be loaded practically continuously whilst minimizing the periods of unproductive standstill of vehicles.

The invention also relates to a vehicle for use in a loading system for transport containers, which vehicle comprises means for accommodating widening elements as described above.

In addition to that, the invention relates to a bunker provided with a weighing platform for use in a loading system for transport containers as described above.

The invention furthermore relates to a method for using the loading system as described above, comprising the steps of providing the transport container on the vehicle, opening the closable front side, moving the transport container between the horizontal position and the vertical position, in which the transport container is supported on the weighing platform, and loading the transport container in the vertical position thereof whilst weighing of the transport container is taking place by means of the weighing platform. It is advantageous, albeit not necessary within the framework of the invention, that said opening of the closable front side takes place before the transport container is moved from the horizontal position to the vertical position.

The advantages of the vehicle, the bunker and the method according to the invention have already been discussed in great detail in the above description of the loading system according to the invention.

The invention will be explained hereinafter by means of a description of a non-limitative preferred embodiment of the invention. In the description, reference will be made to the following Figures.
Figure 1 shows in side elevation, partially in vertical sectional view, a first situation for the application of the loading system according to the invention;
Figure 2 shows a second situation;
Figure 3 shows a third situation;
Figure 4 shows a fourth situation;
Figure 5 shows a fifth situation;

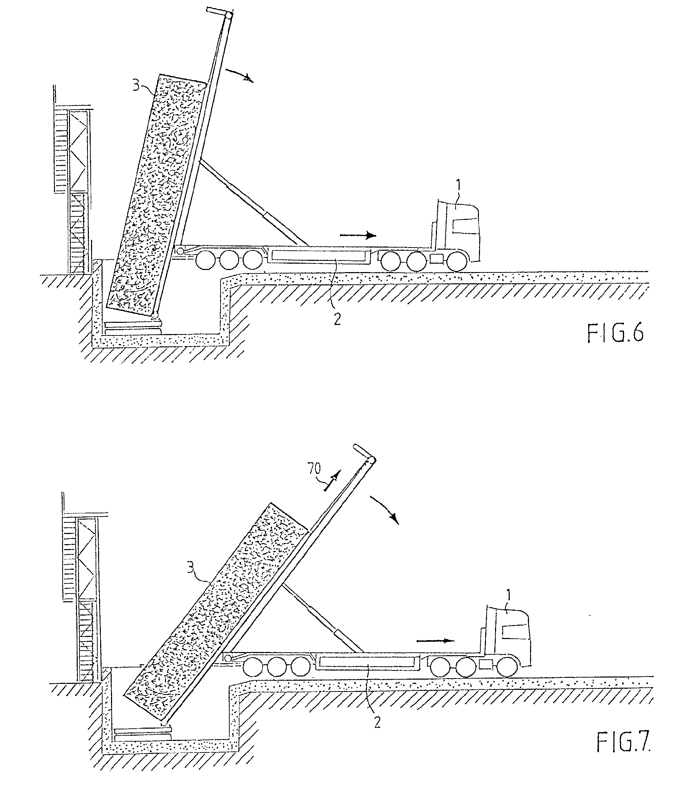

Figure 6 shows a sixth situation;
Figure 7 shows a seventh situation;
Figure 8 shows in perspective view practically the third situation of Figure 3;
Figure 9 shows in perspective view a detail of Figure 8;
Figure 10 shows in perspective view a situation between said fourth and said fifth situation;
Figure 11 shows in perspective view a detail of Figure 10;
Figure 12 shows in perspective view the fourth situation as shown in Figure 4;
Figure 13 shows a detail of Figure 12;
Figure 14 shows in perspective view the area surrounding a retaining mechanism;
Figure 15 shows the retaining mechanism in more detail;
Figure 16 shows the retaining mechanism in cooperation with a transport container in the situation according to Figure 10;
Figure 17 shows the cooperation between the retaining mechanism and the container while the container is being winched up;
Figure 18 shows the situation in the unlikely event of fracture of the winching cables;
Figure 19 shows the retaining mechanism in the situation that is shown in Figure 18; and
Figure 20 shows the transport container provided with a stiffening frame.

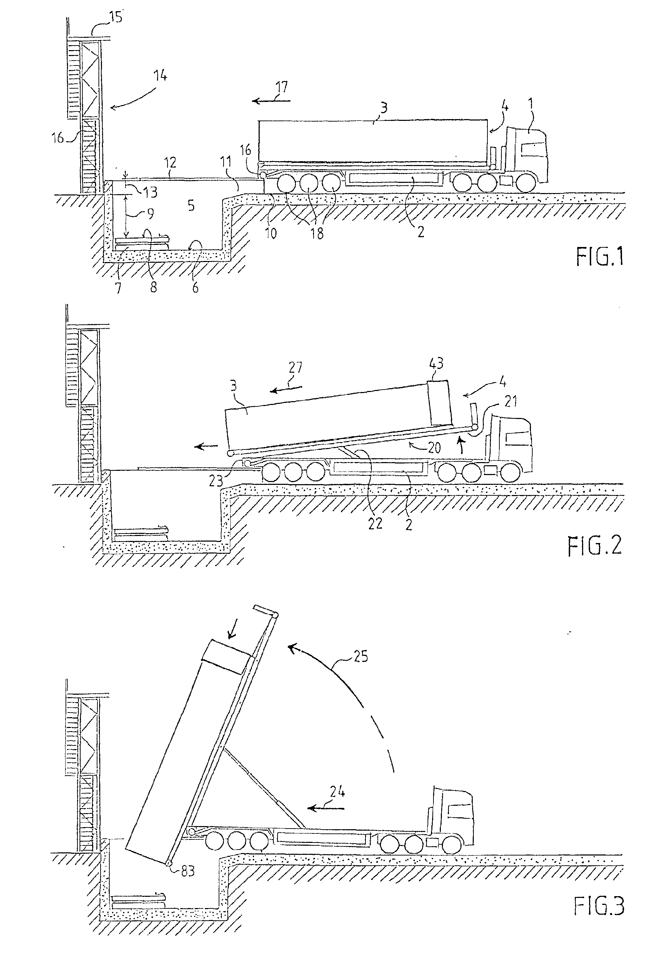

Figure 1 shows a truck 1 and trailer 2, on which a standard 40-foot container 3 as known to those skilled in the art is present. The transport container 3 is built up of steel walls and can only be opened via double swing doors 43 (Figure 2) at the front side 4 of the transport container 3.

Present at the rear side of the transport container is a bunker 5 comprising a bottom 6, on which a weighing platform 7 is present. The upper surface 8 of the weighing platform 7 is disposed a vertical distance of 160 cm (indicated by the dimension line 9) below the supporting surface 10 for the tractor 1 and the trailer 2. A U-shaped concrete edge 11 extends around the bunker 5 above the level of the supporting surface 10. The U-shape is open at the front side, so that the transport container can be positioned between the legs of the U-shape. Below the surface level, the concrete edge 11 blends into the walls and the bottom of the bunker 5. Steel strips 12 functioning as guide elements are fixed to the ends of the legs of the U-shaped concrete edge on either side of the transport container 3. The upper sides of the strips 12 extend at a distance of 40 cm above the level of the supporting surface 10 (indicated by dimension line 13), so that the distance between the upper side 8 of the weighing platform 7 and the upper side of the steel strips 12 is determined to be 200 cm. Present at the rear side of the bunker 5 is a stand 14 comprising a platform 15 and steps 16 for reaching the platform 15.

At the rear side of the trailer 2, projecting axle journals 16 are present on either side of the transport container 3.

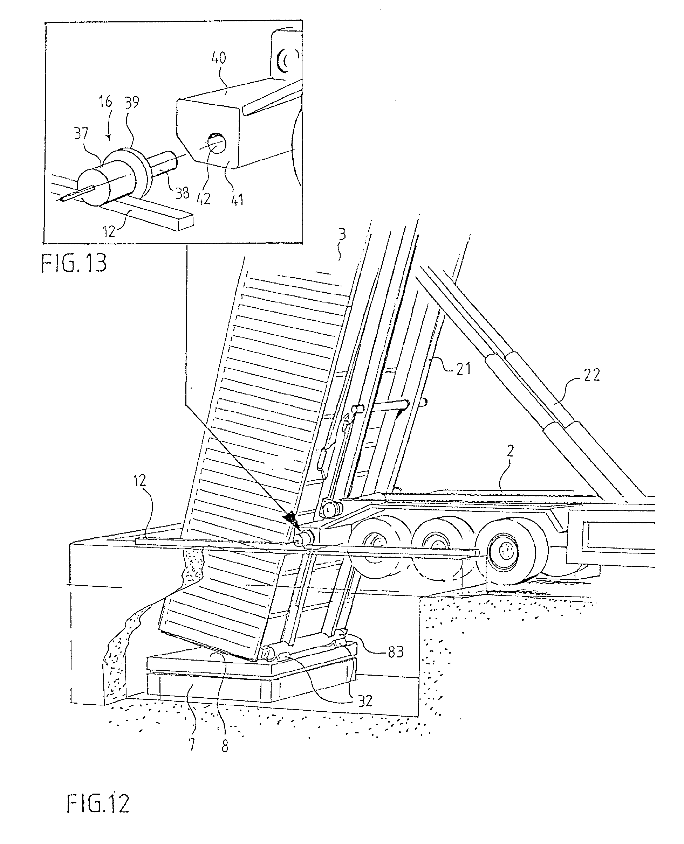

One of the two axle journal 16 is shown in more detail in Figures 12 and 13. The axle journals 16 is built up of a guide portion 37, a bearing portion 38 and a collar 39 positioned therebetween. A mounting beam 40 is attached to the rear side of the trailer 2, which mounting beam has a lateral surface 41 which coincides with the associated longitudinal side of the transport container 3. A bore 42 is formed in said lateral surface 41, in which bore the bearing portion 38 can be received, with the collar 39 abutting against the lateral surface 41. In principle, it is possible for the axle journals 16 to be connected to the bunker 5 on either side of the transport container 3, so that the axle journals 16 are used with all the trailers that present themselves in succession at the bunker 5.

The axle journals 16, which have a common central axis, are rotatable with respect to the trailer 2. In the situation that is shown in Figure 1, the rear sides of the trailer 2 and of the transport container 3 extend just above the ends of the steel strips 12. The truck 1 moves rearwards as indicated by the arrow 17, together with the trailer 2 and the transport container 3, of course. Although initially the axle journals 16 are in rolling contact with the strips 12 whilst the wheels 18 of the trailer 2 are at the same time in rolling contact with the supporting surface 10, the latter contact is lost as the rearward movement progresses, because the vertical spacing between the supporting surface 10 and the upper side of the steel strips 12 slightly increases in rearward direction. As a result, the rear wheels 18 will lose contact with the supporting surface 10 and the rear side of the trailer will be fully supported on the strips 12 via the projecting axle journals 16.

During the rearward movement of the truck 1 from the situation that is shown in Figure 1, the first tilting movement of the transport container 3 takes place simultaneously therewith. In order to effect said tilting movement, a tilting device 20 is arranged on the trailer 2, which tilting device mainly consists of a tiltable supporting structure 21 and a hydraulic telescopic arm 22 which operates between the trailer 2 and the supporting structure 21. Tilting takes place about a tilting axis 23, which is located in the immediate vicinity of the common central axis of the axle journals 16. In the situation that is shown in Figure 2, winching down of the transport container 3 along the supporting structure 21 as indicated by the arrow 27 has started, as a result of which space has become available at the front side 4 of the transport container 3 for opening the double swing doors 43.

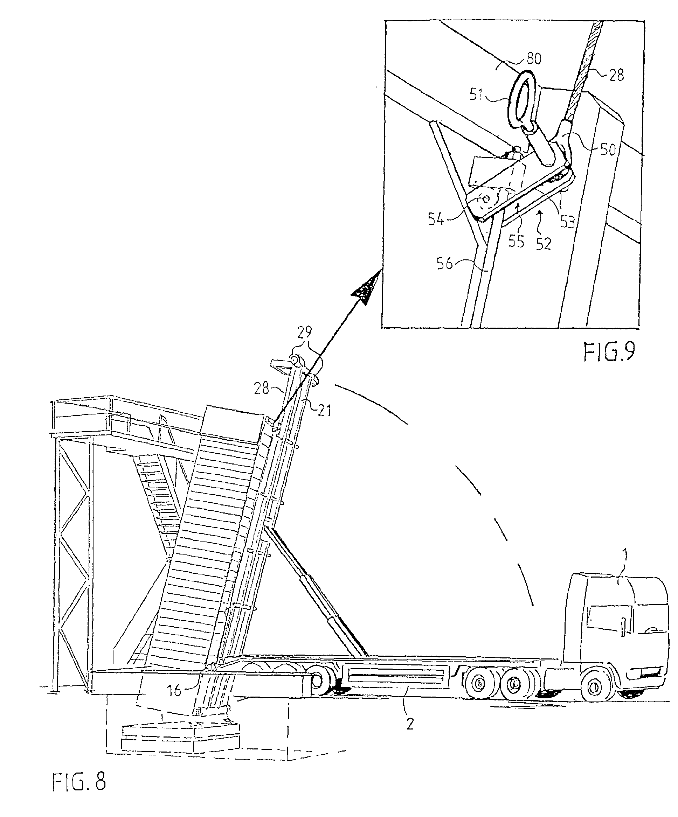

Upon further rearward movement, as indicated by the arrow 24, and simultaneous further pivoting movement, as indicated by the arrow 25, the situation that is shown in Figures 3 and 8 is reached, All the rear wheels 18 are detached from the supporting surface 10 in this situation. Their supporting capacity has been taken over in particular by the axle journals 16, which are supported on the strips 12 to that end. As is shown in particular in Figures 8 and 9, a double winching device 29 is fixed to the front side of the supporting structure 21 by means of a cable 28, which cable is connected to the transport container 3. As a result of said winching down, the transport container 3 moves to a position within the bunker 5. The connection between the cable 28 and the transport container 3 is shown in detail in Figure 9. An eye 50 is arranged at the end of the cable 28. An extensible pin 51, which forms part of a connecting piece 52, extends through said eye 50. The connecting piece 52 furthermore comprises two strip members 53 and a spacer 54 extending between the two strip members 53. The strip members 53, together with the pin 51 and the spacer 54, form a closed passage 55 for a tensioned steel cable 56, which is arranged on a subframe 80 yet to be described in more detail, which is detachably connected to the underside of the transport container 3.

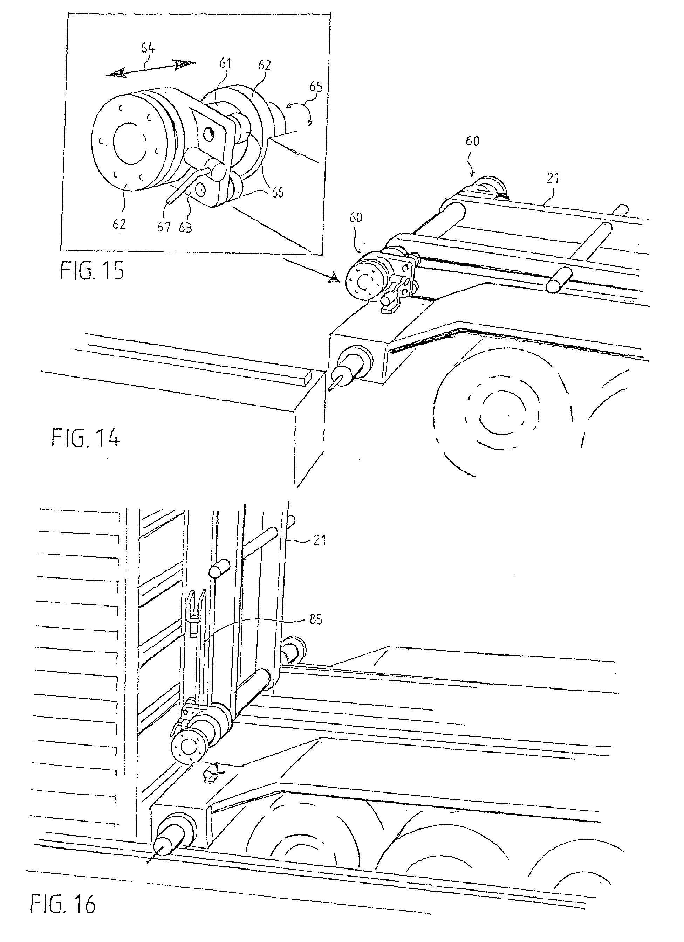

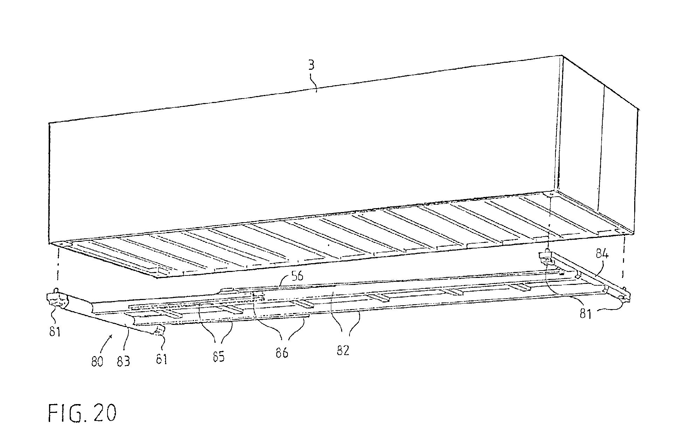

For a clear understanding of the description hereinafter, the aforesaid subframe will be discussed first. As is shown in Figure 20, the subframe 80 is detachably connected, by means of connecting bolts 81, to the underside of the transport container 3 in the corner points of the subframe 80. The subframe 80 consists mainly of two longitudinal beams 82, which are connected to a first cross beam 83 and a second cross beam 84 at their respective ends. The first cross beam 83 has a circular outer circumference, so that it can function as a roller, as will become apparent hereinafter. On the outer sides of the longitudinal beams 22, strip members 85 extend along part of the length thereof, which strip members are provided with stop elements 86 on the side located near the second cross beam 84. The respective functions of the strip members 85 and the stop elements 86 will be explained in more detail yet with reference to the Figures 14 - 19. Figure 20 also shows the steel cable 56 extending along the longitudinal beam 82. The second steel cable 56 at the rear side is not shown.

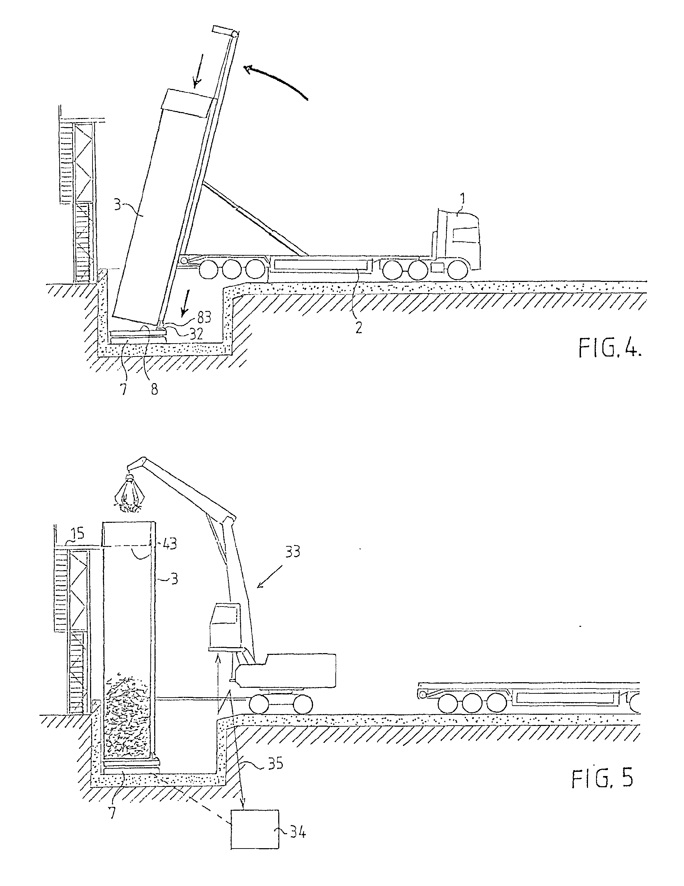

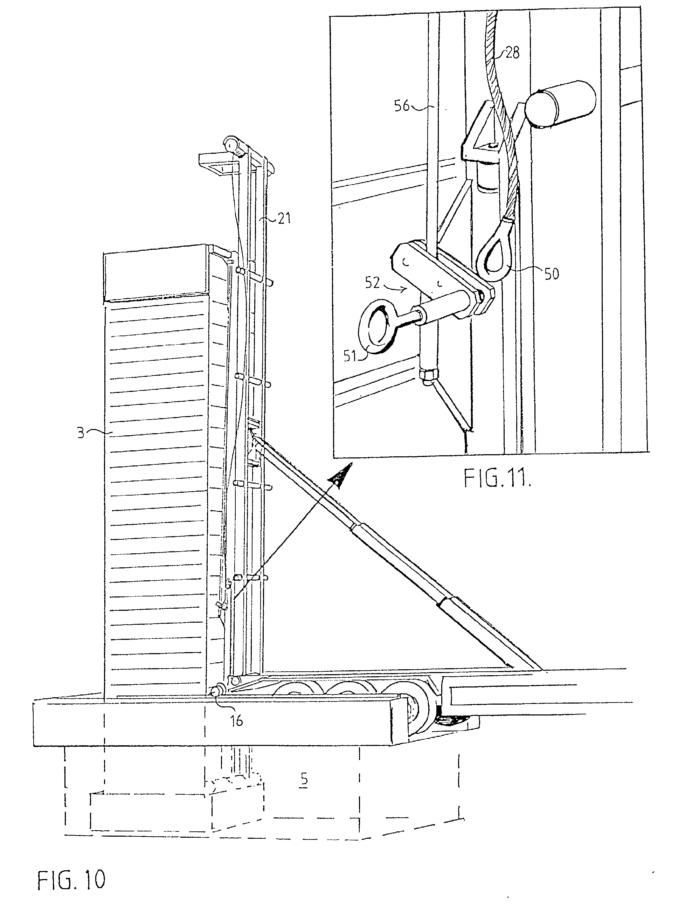

Upon further winching down of the transport container 3 from the situation that is shown in Figure 3, the transport container 3 comes into contact with the weighing platform 7 via the first cross beam 83 of the subframe 80 (see Figures 4 and 12). On the weighing platform, the first cross beam 83 is received in dishes 32 which are arranged on the upper surface 8 of the weighing platform 7. As soon as there is contact between the cross beam 83 of the transport container 3 and the dishes 32 on the weighing platform 7, the transport container 3 is prevented from slipping away in horizontal direction over the upper surface 8 of the weighing platform 7. The dishes 38 function as bearing surfaces for the cross beam 83. Once said contact has been established, the truck brakes are released and the truck will roll rearwards on its own accord together with the trailer under the influence of the force of gravity of the transport container 3, until the transport container 3 occupies the vertical position in which the transport container 3 is supported on the weighing platform 7. The dishes 32 and the cross beam 83 pivot with respect to each other during said movement. As soon as this vertical position has been reached (Figures 10 and 11), the cable 28 will be detached from the transport container 3 by winching the cable 28 further down, as a result of which the eye 50 will move downwards together with the connecting piece 52 along the tensioned steel cable 56, until it comes within reach of an operator. The operator can then disconnect the cable 28 from the connecting piece 52 by pulling out the pin 51. Following this, the truck 1 and the trailer 2 move off.

As is shown in Figure 5, loading of the transport container, for example with aluminium scrap material, takes place by means of a self-propelling grab crane 33. During said loading, weighing data obtained from the weighing platform 7 are registered by the registration system 34 (schematically indicated), which subsequently transmits these weighing data wirelessly, as indicated by the arrow 35, to the driver of the grab crane 33, who can read these data on a display, for example. Thus the driver is constantly informed of the weight of the transport container, so that he can prevent the transport container 3 being overloaded. In addition to that, care can be taken that the transport container 3 is loaded as optimally as possible by selecting the specific weights of the materials with which the transport container 3 is being loaded in such a manner that the volume of the transport container 3 is fully taken up by the cargo and that furthermore the container is loaded as closely to its maximum allowable loading weight as possible.

After the transport container 3 has been loaded, it is closed at its front side 4 from the platform 15 by swinging the swing doors 43 to and locking them in position. The transport container 3 is then moved back from the vertical position to the horizontal position on the trailer 2 by connecting the cable 28 to the transport container 3 again, which is done by fitting the eye 50 in the connecting piece 52 again by closing the pin 51. Initially, the transport container 3 is tilted through an angle of about 45 degrees, during which tilting the truck 1 and the trailer 2 move forward. From this tilted position, the winching up of the transport container 3 in the direction indicated by the arrow 70 is started. Since said winching up takes place in the loaded condition of the container, the possible fracture of one of the cables 28, or both, must be reckoned with. This could lead to unsafe situations, of course. In order to prevent such unsafe situations, a safety system is provided, which will be explained in more detail with reference to Figures 14 - 19.

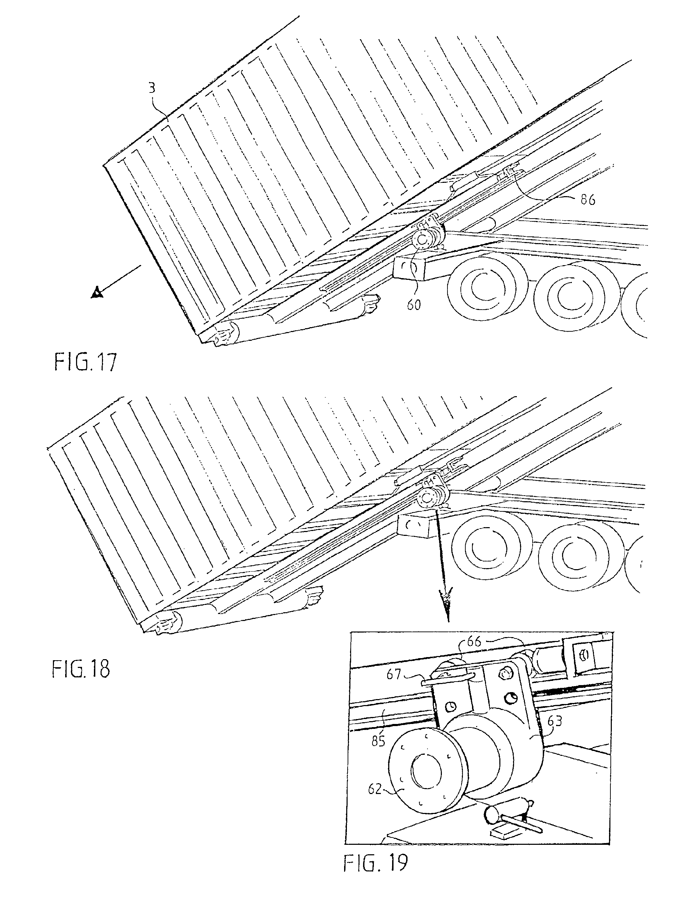

Two locking mechanisms 60 are provided at the rear end of the supporting structure 21, one on either side thereof. Each locking mechanism 60 mainly comprises a pin 61 with flange members 62 present at both ends thereof. Arranged between the flange members 62 is a locking block 63, which block is capable of axial movement over the pin 61, as indicated by the double arrow 64, and of pivoting movement through an angle of 180 degrees about the pin 61, as indicated by the double arrow 65. Two running wheels 66 are arranged on the locking block 63. The locking block 63 can be secured in position with respect to the pin 61 by operating the handle 67. When the transport container 3 is to be placed on the supporting structure 21, the locking blocks 63 are more to their outermost axial position over the pin 61 and the locking blocks are rotated to the transport container 3 with their running wheels 66. Then the truck 1 driving the trailer 2 is reversed against the transport container 3 with the supporting structure 21 extending vertically. In order to effect a connection, the locking blocks 63 are moved inwardly over the pin 61, as a result of which the wheels 66 will be positioned behind the strip members 85, thereby retaining said strip members. Finally, the locking block 63 is secured in this position by operating the handle 67. In the unlikely event of one of the two cables 28, or both, breaking, the transport container 3 will slide downwards along the supporting structure 21 from the position that is shown in Figure 17, until the two locking blocks 63 make contact with the stop elements 86 with their upper running wheels 66, as a result of which the transport container 3 is prevented from moving further downwards. This situation is shown in Figure 18.

In an advantageous embodiment, the loading system according to the invention is a dual system, in which, for example, two bunkers and the associated facilities are arranged side-by-side. As soon as the truck 1 and trailer 2 has finished placing an empty transport container 3 in a vertical position and has been disconnected therefrom, the truck 1 and trailer 2 can receive a second, loaded transport container from the second bunker immediately thereafter and transport it to its destination. In this way unproductive standstill of the truck 1 and trailer 2 is prevented.

## Claims

1. A loading system for a rectangular, elongate transport container having a closable front side, a rear side disposed opposite said front side, two lateral sides disposed opposite each other, a bottom side and a roof side, which system comprises a vehicle for the transport container, which is supported on a first supporting surface, a tilting device for moving the transport container between a horizontal position, in which the transport container is present on the vehicle, and a vertical position, in which the transport container is supported on its rear side at a position remote from the vehicle, and loading means for loading the transport container in the vertical position thereof, **characterized by** a second supporting surface, on which a weighing platform is present, which weighing platform comprises a bearing surface on which the transport container is supported in the vertical position thereof.

2. A loading system according to claim 1, **characterized in that** communication means are provided for the transmission of output data from the weighing platform to the loading means.

3. A loading system according to claim 2, **characterized in that** said communication means are wireless communication means.

4. A loading system according to any one of the preceding claims, **characterized in that** sensor means are provided for determining a degree of filling of the transport container during loading thereof.

5. A loading system according to claim 1, 2, 3 or 4, **characterized in that** said second supporting surface is disposed at a lower level than said first supporting surface.

6. A loading system according to claim 5, **characterized in that** said second supporting surface is formed by a bottom of a first recessed bunker having an open upper side.

7. A loading system according to any one of the preceding claims, **characterized in that** the vehicle is provided with widening elements near its rear end, which widening elements extend beyond the lateral sides of the transport container on either side thereof and which are designed to be supported by guides arranged on either side of the second supporting surface.

8. A loading system according to claim 7, **characterized in that** said widening elements are formed by projecting axle members which are rotatable with respect to the vehicle.

9. A loading system according to claim 7 or 8, **characterized in that** the widening elements are detachably connected to the vehicle.

10. A loading system according to claim 7, 8 or 9, **characterized in that** the vertical spacing between the bearing surface of the weighing platform and the guides ranges between 1.5 m and 2.5 m.

11. A loading system according to any one of the preceding claims, **characterized in that** the bearing surface of the weighing platform is fitted with receiving elements for receiving coupling elements, which are arranged near the rear side of the bottom of the transport container, which receiving elements and which coupling elements can pivotally interact.

12. A loading system according to claim 11, **characterized in that** the coupling elements form part of a subframe which is detachably connected to the underside of the transport container.

13. A loading system according to any one of the preceding claims, **characterized in that** a platform is provided near the front side of the transport container in the vertical position thereof.

14. A loading system according to any one of the preceding claims, **characterized in that** a further second supporting surface comprising a further weighing platform is provided.

15. A vehicle for use in a loading system for transport containers, which vehicle comprises means for accommodating widening elements as defined in claim 7, 8 or 9.

16. A bunker comprising a weighing platform for use in a loading system for transport containers according to any one of the claims 1-14.

17. A method for using a loading system according to any one of the claims 1-14, comprising the steps of providing the transport container on the vehicle, opening the closable front side, moving the transport container between the horizontal position and the vertical position, in which the transport container is supported on the weighing platform, and loading the transport container in the vertical position thereof whilst weighing of the transport container is taking place by means of the weighing platform.
